# FASCICULE DE BREVET EUROPEEN

(11) **EP 0 721 960 B1**
(45) Date de publication et mention de la délivrance du brevet: **29.03.2000**
(21) Numéro de dépôt: 96420002.6
(22) Date de dépôt: 04.01.1996
(51) Int. Cl.: C08F 2/32, C08F 20/56

(54) **Procédé pour préparer des émulsions stables de polyélectrolytes de haut poids moléculaire en émulsion-inverse**
Verfahren zur Herstellung von stabilen Emulsionen von Polyelektrolyten mit hohem Molekulargewicht in umgekehrter Emulsion
Process for preparing stable emulsions of polyelectrolytes with high molecular weight in inverse emulsion

(30) Priorité: 10.01.1995 FR 9500383
(43) Date de publication de la demande: 17.07.1996
(73) Titulaire: S. N. F., F-42000 Saint-Etienne (FR)
(72) Inventeur: Hund, René, F-42390 Villars (FR); Georges, Sébastien, F-69100 Villeurbanne (FR)
(74) Mandataire: Vuillermoz, Bruno

(56) Documents cités:
- FR-A- 2 337 738
- US-A- 4 339 371
- CHEMICAL ABSTRACTS, vol. 118, no. 22, 31 Mai 1993 Columbus, Ohio, US; abstract no. 213747, 'PREPARATION OF DISPERSIONS OF HYDROPHILIC MONODISPERSE POLYMER MICROPARTICLES' page 14; & JP-A-04 279 605 (MITSUBISHI PAPER MILLS LTD.)

## Description

### Domaine Technique

L'invention concerne un procédé pour préparer des émulsions stables de polyélectrolytes de haut poids moléculaire en émulsion-inverse ; elle concerne également les émulsions ainsi obtenues et leurs applications dans l'industrie.

Les polyélectrolytes de haut poids moléculaire sont des homo- ou copolymères organiques synthétiques solubles bien connus et largement utilisés comme agents floculants ou comme agents épaississants et dans de nombreux autres secteurs techniques bien connus. Les polyacrylamides sont parmi les polyélectrolytes solubles les plus préconisés.

### Techniques antérieures

La préparation des émulsions de polyélectrolytes, notamment de polyacrylamide de haut poids moléculaire en émulsion-inverse est bien connue (voir par exemple les documents US-A-3 734 873, 4 339 371 et 4 777 231 ou FR-A-2 390 983 du Demandeur). Il n'y a donc pas lieu de la décrire ici en détail.

Pour l'essentiel, ce procédé de préparation consiste :
. tout d'abord, à dissoudre les monomères ou mélange de monomères dans une phase aqueuse ;
. puis à préparer une phase organique d'un agent tensio-actif, dénommé parfois également surfactant, dans de l'huile minérale ou végétale ou des mélanges ;
. à mélanger ces deux phases à température ambiante ;
. selon le degré HLB du tensio-actif, à cisailler plus ou moins le mélange, de manière à obtenir une émulsion eau dans huile (E/H);
. à dégazer, notamment par de l'azote ;
. à polymériser l'émulsion en présence de catalyseurs connus, tels que des mélanges redox, des composés azoïques ;
. et enfin, à incorporer l'émulsion par un agent inverseur, tel que des alcools gras en C₁₅-C₁₆ ou des nonylphenolethoxylés, pour obtenir une émulsion eau dans huile (E/H), de manière à rendre le polyacrylamide obtenu soluble dans l'eau.

Bien que très largement répandue, cette technique présente l'inconvénient de conduire parfois à la formation de gels durant la polymérisation. Cette formation de gels est dûe pour partie essentielle à la présence d'impuretés dans les monomères ou dans la phase organique, ou même dans le choix des conditions opératoires. Comme on le sait, les émulsions contenant même une faible proportion de gels deviennent très rapidement difficilement filtrables, ce qui entraîne un colmatage des pompes, des pertes de stabilité. Bref, ces émulsions sont totalement impropres à l'usage.

En effet, les émulsions présentant une proportion importante de gels sont le plus généralement incinérées pour être détruites. Celà entraîne donc des pertes financières appréciables.

On a alors suggéré de faire appel à des techniques de filtration poussées, par exemple au moyen de filtres contra-rotatifs. Toutefois, même si on arrive à extraire les gels formés lors de la polymérisation, l'émulsion finale obtenue reste très instable et développe dans le temps de nouveaux gels qui la rendent à nouveau impropre à son usage.

En pratique, jusqu'à ce jour, on n'a pas trouvé de solution satisfaisante permettant de récupérer les émulsions de polyacrylamide dans lesquelles auraient pu se former des gels de manière accidentelle.

L'invention pallie ces inconvénients.

### Description sommaire de l'Invention

Le procédé selon l'invention pour préparer des émulsions stables de polyélectrolytes de haut poids moléculaire supérieur à un million, en émulsion-inverse, notamment de polyacrylamide, dans lequel :
- on dissout les monomères dans une phase aqueuse,
- on prépare une phase organique contenant un agent tensio-actif,
- on mélange ces deux phases pour obtenir une émulsion du type eau dans huile (E/H),
- on effectue un dégazage, notamment par l'azote,
- on polymérise les monomères,
- on ajoute dans cette émulsion (E/H) un agent inverseur de manière à rendre le polyélectrolyte obtenu soluble dans l'eau,
**se caractérise** en ce qu'il consiste, avant de mélanger les deux phases, à ajouter à la phase aqueuse, sous légère agitation, un polymère soluble synthétique de bas poids moléculaire inférieur à 500 000, de même nature chimique et de même caractère ionique que le polyélectrolyte envisagé.

En d'autres termes, pour réduire au maximum la formation de gels, l'invention consiste, dans un procédé de fabrication de polyélectrolyte de haut poids moléculaire en émulsion-inverse, à introduire dans la phase aqueuse un polymère synthétique et soluble dans l'eau de bas poids moléculaire, présentant les mêmes caractères chimiques généraux et ioniques que le polymère de haut poids moléculaire envisagé, mais ne présentant pas forcément la même densité de charge ionique, ni exactement la même composition chimique.

Le caractère chimique de ce composé peut être avantageusement le même que celui du polyélectrolyte. Ce peut être aussi un composé de caractère voisin, tel que par exemple un contre-ion, tel que ADAM-DMS et ADAM chlorométhylé.

Dans une forme d'exécution, l'invention consiste à introduire dans la phase aqueuse avant le mélange à la phase organique, un agent coagulant de même charge ionique que le polyélectrolyte à haut poids moléculaire envisagé.

En pratique, le polymère à bas poids moléculaire est introduit sous légère agitation, et sous forme de solution aqueuse ayant une concentration en poids d'au moins 15 %, avantageusement d'au moins 25 %, de préférence 30 %. On a observé que si la solution aqueuse du polymère à bas poids moléculaire est inférieure à 25 % en poids, l'eau apportée dilue inutilement le polyélectrolyte final. En revanche, si la concentration excède 50 %, la solution devient très visqueuse et difficile à manipuler. De la sorte, on utilise avantageusement des solutions ayant une concentration en matière active voisine de 30 %. Cette solution est ajoutée à raison de 2,5 à 20 % en poids du poids de l'émulsion finale.

Comme dit, la solution aqueuse de polymère soluble à bas poids moléculaire est introduite dans la phase aqueuse avant émulsification, c'est-à-dire avant le mélange des deux phases, respectivement aqueuse et organique, et ce à raison de 2,5 à 20 % en poids par rapport au poids de l'émulsion finale. En effet, on a observé que si la concentration de la solution aqueuse est inférieure à 2,5 %, on obtient en général un effet peu marqué. Si cette concentration excède 20 %, le mélange devient trop visqueux, ce qui entraîne des difficultés substantielles de mise en oeuvre.

On obtient de bons résultats avec des quantités de solution aqueuse introduites comprises entre 5 et 15 % du poids de l'émulsion finale.

Comme déjà dit, ce mélange se fait à température ambiante sous agitation (50 à 100 tours/minute) durant le temps nécessaire pour homogénéiser l'ensemble.

Les proportions indiquées peuvent varier selon les polymères mis en oeuvre.

Comme polymère soluble de bas poids moléculaire, on peut utiliser un homopolymère ou un copolymère de (méth)acrylamide, d'acide (méth)acrylique ou de leurs sels, d'ester d'acrylate ou de méthacrylate cationisé ou non, de diallyldiméthylammonium chlorure. Le poids moléculaire de ce composé est inférieur à 500 000, et est de préférence voisin de 100 000.

Le polyélectrolyte à haut poids moléculaire est un polyacrylamide de poids moléculaire supérieur à un million, de préférence à cinq millions et avantageusement dix millions et au-delà. Comme déjà dit, le polyacrylamide peut être cationique, non ionique, anionique, voire amphotère. Selon la caractéristique essentielle de l'invention, il importe que le polymère soluble à bas poids moléculaire présente le même caractère ionique et la même nature chimique que le polymère de haut poids moléculaire envisagé.

Dans une première forme de réalisation, le polymère de haut poids moléculaire est un copolymère cationique d'acrylamide et d'un monomère éthylénique cationique non saturé, choisi dans le groupe comprenant l'acrylate de diméthylaminoéthyl (ADAME), le méthacrylate de diméthylaminoéthyl (MADAME), quaternisés ou salifiés, le chlorure de diméthyldiallylammonium (DADMAC), le chlorure d'acrylamidopropyltriméthylammonium (APTAC), et le chlorure de méthacrylamidopropyltriméthylammonium (MAPTAC).

Dans une seconde forme de réalisation, le polyacrylamide est un copolymère anionique d'acrylamide et d'acide acrylique ou méthacrylique, d'acrylamido-méthylpropylsulfonique acide (AMPS), ou leur forme neutralisée.

Dans une autre forme de réalisation, le polyacrylamide peut être non ionique, par exemple ce peut être un polymère d'acrylamide ou de méthacrylamide.

L'invention s'applique à tout type comparable de (co)-polymère.

La manière dont l'invention peut être réalisée et les avantages qui en découlent, ressortiront mieux des exemples de réalisation qui suivent.

### Manières de réaliser l'Invention

### Exemple 1 - Préparation d'un copolymère cationique acrylamide/ADAMDMS à bas poids moléculaire

Dans un réacteur à double enveloppe, on charge à température ambiante :
- 385 kg d'acrylamide à 50 % dans l'eau ;
- 214 kg d'acrylate de diméthylaminoéthyl quaternisé au diméthylsulfate (ADAMDMS), à 80 % dans l'eau ;
- 401 kilos d'eau.

Par addition d'acide sulfurique, on ajuste le pH à 5.

Sous agitation, on refroidit à 10°C en envoyant de l'eau glycolée dans la double enveloppe du réacteur et on dégaze à l'azote pendant trente minutes environ. Puis, on procède à l'initiation de la polymérisation par l'addition successive de :
- trois kilogrammes de persulfate d'ammonium ;
- un kilogramme de métabisulfite de sodium ;
- vingt grammes de sel de Mohr.

On observe une exothermicité de 70°C en dix minutes.

On obtient alors un liquide formé d'un copolymère cationique acrylamide/ADAMDMS présentant une viscosité Brookfield (module 3 à 30 tours/min à 25°C) de 1500 mPa.s et une concentration de 36 % dans de l'eau. Ce liquide présente une cationicité de 19 moles pour cent.

### Exemple 2 - Préparation d'un copolymère cationique acrylamide/ADAMDMS à haut poids moléculaire selon l'art antérieur

Dans un réacteur de vingt tonnes, on charge 5920 kilos d'une phase organique constituée par un mélange (une coupe) d'hydrocarbures, commercialisé par EXXON sous la marque "EXSOL D 100", à laquelle on ajoute 540 kilos d'un agent tensioactif formé par un monooleate de sorbitan et 9,2 kilos de 2-2'azobisisobutyronitrile largement connu sous la dénomination AZDN.

Dans une cuve de dissolution, on prépare une phase aqueuse en mélangeant 9240 kilos d'acrylamide à 50 % dans l'eau, et 3860 kilos d'acrylate de diméthylaminoéthyl cationisé au diméthylsulfate (ADAMDMS) à 80 % dans l'eau.

On ajoute dans cette phase aqueuse 1540 grammes de bromate de potassium et 11,540 kilos d'un agent complexant à base de diéthylène triamine pentacétique acide à 40 % dans l'eau, commercialisé par DOW sous la marque "VERSENEX 80".

On ajoute ensuite 2,32 kilos de formiate de sodium (agent de transfert).

On transfère la phase aqueuse dans la phase organique sous légère agitation (60 tours/min). On passe ensuite le mélange dans un homogénéiseur, dénommé également émulsificateur, destiné à le cisailler à température ambiante. On obtient alors une émulsion E/H que l'on dégaze à l'azote pendant trente minutes environ.

On initie, puis on conduit la polymérisation en ajoutant dans l'émulsion en continu du sulfite de sodium , de façon à maintenir une exothermicité de 0,1°C par dix secondes.

On obtient alors vingt tonnes d'une émulsion cationique de polyacrylamide de haut poids moléculaire (voisin de 13,5 millions) présentant une viscosité UL de 5 mPa.s (mesurée à 0,1 % de polymère dans une solution molaire de NaCl à 25°C à 60 tours/min au moyen d'un adaptateur UL).

On filtre l'émulsion E/H obtenue en la faisant passer de manière connue dans des sacs en toile de polyamide dont la maille présente une ouverture de 300 micromètres. A plat, ces sacs ont une largeur de 500 mm et une longueur de 1600 mm.

Pour filtrer l'ensemble de l'émulsion, il faut quinze sacs. Les sacs retiennent le gel formé que l'on pèse. On obtient ainsi 91 kilos de gels, soit 0,45 % du poids total de l'émulsion-inverse. Ces gels sont visibles à l'oeil nu et rendent l'émulsion totalement impropre à tout usage ; on ne peut donc que l'incinérer.

### Exemple 3 - Préparation d'un copolyacrylamide cationique à haut poids moléculaire selon l'invention

On répète l'exemple 2 en ajoutant à la phase aqueuse, avant son mélange à la phase organique, 680 kilos du copolyacrylamide liquide à bas poids moléculaire de l'exemple 1. Lors de la filtration, un seul sac suffit pour les vingt tonnes produites.

On obtient une émulsion E/H de poids moléculaire voisin de 12 millions, présentant une viscosité UL de 5,05 mPa.s et présentant une densité de 15 moles pour cent. Après filtration, on obtient 4,6 kilos de gel, soit 0,023 %. Ce gel n'est pas visible à l'oeil nu.

L'émulsion E/H obtenue est directement utilisable pour la plupart des applications existantes, voire même les plus sensibles, telles que l'application rétention-égouttage en papèterie.

Cet exemple illustre parfaitement le progrès selon l'invention, puisque le même polymère (exemple 2) non traité conformément à l'invention, conduit à la formation de gels en quantité notable et préjudiciable rendant l'émulsion totalement impropre à son usage, alors qu'en revanche, l'addition d'une quantité d'un polymère de bas poids moléculaire, rend l'émulsion opérationnelle.

### Exemple 4 - Préparation d'un autre copolyacrylamide à haut poids moléculaire cationique selon l'art antérieur

On répète l'exemple 2 avec la même phase organique.

Dans la phase aqueuse, on charge 10260 kilos d'acrylamide à 50 %, 2840 kilos d'ADAM chlorométhylé à 80 % dans l'eau et 1,085 kilos de bromate de potassium.

On obtient un copolyacrylamide en émulsion présentant une viscosité UL de 4,4 mPa.s et de poids moléculaire voisin de 10 millions, et présentant une cationicité de 14 moles pour- cent.

Comme à l'exemple 2, il faut six sacs pour filtrer les vingt tonnes produites. On obtient une quantité de gels voisine de 0,3 %, visible à l'oeil nu, rendant l'émulsion E/H impropre à son usage.

### Exemple 5 - Préparation du copolyacrylamide de l'Exemple 4 selon l'invention

On répète l'exemple 4 en ajoutant à la phase aqueuse, avant son mélange à la phase organique, 820 kilos du copolyacrylamide liquide cationique de l'exemple 1.

On obtient alors un copolyacrylamide en émulsion E/H de viscosité UL 4,2 mPa.s, de poids moléculaire voisin de 10 millions et présentant une cationicité proche de 14 moles pour cent.

Un seul sac suffit pour filtrer cette émulsion, qui contient seulement 0,021 % de gels non visibles à l'oeil nu. Cette émulsion est donc parfaitement utilisable pour les applications connues de ces émulsions.

### Exemple 6 - Préparation d'un copolymère anionique acrylamide/acide acrylique de bas poids moléculaire

Par le même procédé qu'à l'exemple 1, on charge dans le réacteur :
- 440 kilos d'acrylamide à 50 % dans l'eau ;
- 94 kilos d'acide acrylique pur,
- 466 kilos d'eau.

On catalyse au moyen d'un mélange contenant 4 kilos de persulfate d'ammonium, 2 kilos de métabisulfite de sodium (MBS), et 20 grammes de sel de Mohr.

On obtient un copolymère anionique à 30 moles pour cent se présentant sous la forme liquide ayant une viscosité de 4000 mPa.s à 31 % dans l'eau.

### Exemple 7 - Préparation d'un copolyacrylamide de haut poids moléculaire anionique selon l'art antérieur

Dans un réacteur de 1,5 litres, on place la phase organique formée de 208 grammes d'huile de colza raffinée, et 112 grammes d'huile de colza estérifié par du glycérol, puis de 16 grammes de monoléate de sorbitan (SPAN 80) et de 14 grammes d'HYPERMER B246 commercialiséspar ICI et de 0,4 gramme d'un catalyseur azoïque AZDN.

La phase aqueuse contient 357 grammes d'un acrylamide à 50 % dans l'eau, 77 grammes d'acide acrylique pur, et un mélange de catalyseur formé de 180 milligrammes de bromate de potassium et 0,45 gramme d'un agent complexant.

On neutralise à la soude jusqu'à pH7, et on complète par de l'eau pour obtenir un poids final de la phase aqueuse de 650 grammes. On mélange ensuite les deux phases, on procède au dégazage, puis on initie la polymérisation par addition de métabisulfite de sodium.

Dès l'addition de la première goutte de métabisulfite, l'émulsion coagule, se prend en masse, et est donc totalement impropre à un quelconque usage. Il faut donc l'incinérer.

### Exemple 8 - Préparation du copolyacrylamide de l'Exemple 7 selon l'invention

On répète l'exemple précédent en rajoutant à la phase aqueuse 100 grammes du copolyacrylamide anionique de bas poids moléculaire de l'exemple 6.

Après l'addition du métabisulfite de sodium, on obtient une émulsion E/H limpide présentant une viscosité UL de 5,5 mPa.s et un poids moléculaire voisin de 15 millions, que l'on filtre aisément et sur laquelle on ne collecte pas de gel.

L'exemple 7 montre que dans les conditions décrites, le mode de polymérisation par catalyseur rédox n'est pas envisageable, puisqu'il conduit immédiatement à un état coagulé.

Le même procédé, lorsqu'il est conduit avec un système de polymérisation azoïque pur (AZDN : 0,4 gramme, température d'initiation : 40°C) et donc sans agent oxydant ou réducteur, permet d'obtenir une émulsion stable, contenant une quantité négligeable de gel.

### Exemple 9 - Préparation d'un copolymère acrylamide - acide acrylique de haut poids moléculaire anionique selon l'art antérieur

Dans un réacteur de 1,5 litres, on place la phase organique formée de 107 grammes d'huile de colza transestérifié par du méthanol commercialisé par la Société ROBBE sous la dénomination ESTOROB 926 -67, et 198 grammes d'huile de colza raffinée, et enfin 24 grammes de monooléate de sorbitan (SPAN 80) et 14 grammes d'HYPERMER B246 commercialiséspar ICI et 0,4 gramme d'un catalyseur azoïque AZDN.

La phase aqueuse contient 357 grammes d'un acrylamide à 50 % dans l'eau, 77 grammes d'acide acrylique pur, et un mélange de catalyseur formé de 180 milligrammes de bromate de potassium et 0,45 gramme d'un agent complexant.

On neutralise à la soude jusqu'à pH7, et on complète par de l'eau pour obtenir un poids final de la phase aqueuse de 650 grammes. On mélange ensuite les deux phases, on procède au dégazage, puis on initie la polymérisation par addition de métabisulfite de sodium.

Dès l'addition de la première goutte de métabisulfite, l'émulsion coagule, se prend en masse, et est donc totalement impropre à un quelconque usage. Il faut donc l'incinérer.

### Exemple 10 - Préparation du copolymère de l'Exemple 9 selon l'invention

On répète l'exemple 9 en rajoutant à la phase aqueuse 100 grammes du copolyacrylamide anionique de bas poids moléculaire de l'exemple 6.

Après l'addition du métabisulfite de sodium, on obtient une émulsion E/H limpide présentant une viscosité UL de 5,5 mPa.s et un poids moléculaire voisin de 15 millions, que l'on filtre aisément et sur laquelle on ne collecte pas de gel.

L'exemple 9 montre que dans les conditions décrites, le mode de polymérisation par catalyseur rédox n'est pas envisageable, puisqu'il conduit immédiatement à un état coagulé.

Le même procédé, lorsqu'il est conduit avec un système de polymérisation azoïque pur (AZDN : 0,4 gramme, température d'initiation : 40°C) et donc sans agent oxydant ou réducteur, permet d'obtenir une émulsion stable, contenant une quantité négligeable de gel.

Toutefois, une polymérisation azoïque pure est plus sensible et nécessite un chauffage préalable. Elle entraîne aussi des problèmes de régulations plus pointus (risque d'emballement de la réaction).

Un système redox permet une initiation à température ambiante, une régulation liée en grande partie à un simple contrôle de débit de la pompe d'alimentation du réducteur (métabisulfite).

Il en découle un intérêt encore plus important de la présente invention qui rend possible la polymérisation en système redox, sans risque de coagulation.

Le procédé selon l'invention présente de nombreux avantages. On peut citer :
- l'absence de formation de gels notable rendant l'émulsion inutilisable ;
- la stabilisation des émulsions dans l'huile végétale pour le système de catalyse redox préconisé.

L'émulsion E/H obtenue est directement utilisable pour la plupart des applications existantes dans le domaine des agents floculants, voire même les plus sensibles, telles que l'application en rétention-égouttage en papèterie, la récupération assistée du pétrole en forage et le traitement de l'eau.

## Revendications

1. Procédé pour préparer des émulsions stables de polyélectrolytes de haut poids moléculaire supérieur à un million, en émulsion-inverse, en réduisant au maximum la formation de gel, dans lequel :
- on dissout les monomères dans une phase aqueuse,
- on prépare une phase organique contenant un agent tensio-actif,
- on mélange ces deux phases pour obtenir une émulsion du type eau dans huile (E/H),
- on effectue un dégazage, notamment par l'azote,
- on polymérise les monomères,
- on ajoute dans cette émulsion (E/H) un agent inverseur de manière à rendre le polyélectrolyte obtenu soluble dans l'eau,
**caractérisé** en ce qu'il consiste, avant de mélanger les deux phases, à ajouter à la phase aqueuse, sous légère agitation, un polymère soluble synthétique de bas poids moléculaire inférieur à 500 000, de même nature chimique et de même caractère ionique que le polyélectrolyte envisagé.

2. Procédé selon la revendication 1, caractérisé en ce que le polymère soluble est un polymère vinylique à bas poids moléculaire qui est introduit sous forme de solution aqueuse, ayant une concentration en poids d'au moins 15 %, de préférence voisine de 30 %, et est ajoutée à raison de 2,5 à 20 % en poids du poids de l'émulsion finale.

3. Procédé selon la revendication 1, caractérisé en ce que le polymère soluble est un agent coagulant vinylique de poids moléculaire voisin de 100000.

4. Procédé selon la revendication 1, caractérisé en ce que le polymère à bas poids moléculaire est un polydiallyl-dimethyl ammonium chlorure (poly DADMAC).

5. Procédé selon l'une des revendications 1 à 4, caractérisé en ce que le polyélectrolyte de haut poids moléculaire est un polyacrylamide de poids moléculaire supérieur à cinq et avantageusement à dix millions.

6. Procédé selon la revendication 5, caractérisé en ce que le polyacrylamide est cationique et est un copolymère d'acrylamide avec un monomère éthylénique cationique non saturé choisi dans le groupe comprenant l'acrylate de diméthylaminoéthyl (ADAME), le méthacrylate de diméthylaminoéthyl (MADAME), quaternisés ou salifiés, le chlorure de diméthyldiallylammonium (DADMAC), le chlorure d'acrylamidopropyltriméthylammonium (APTAC), et le chlorure de méthacrylamidopropyltriméthylammonium (MAPTAC).

7. Procédé selon la revendication 5, caractérisé en ce que le polyacrylamide est un copolymère anionique d'acrylamide et d'acide acrylique ou méthacrylique.

8. Procédé selon la revendication 5, caractérisé en ce que le polyacrylamide est non ionique et est un polymère d'acrylamide ou de méthacrylamide.

## Patentansprüche

1. Verfahren zur Herstellung von stabilen Emulsionen von Polyelektrolyten mit hohem Molekulargewicht von über einer Million in Umkehremulsion unter maximaler Verringerung der Gelbildung, bei welchem
- die Monomere in einer wässrigen Phase gelöst werden,
- eine ein Tensid enthaltende organische Phase hergestellt wird,
- diese beiden Phasen gemischt werden, um eine Wasser-in-Öl-Emulsion (WO) zu erhalten,
- eine Entgasung insbesondere mit Stickstoff vorgenommen wird,
- die Monomere polymerisiert werden,
- dieser Emulsion (WO) ein Umkehrmittel beigegeben wird, so daß der erhaltene Polyelektrolyt in Wasser löslich wird, dadurch gekennzeichnet, daß vor dem Mischen der beiden Phasen der wässrigen Phase unter leichtem Rühren ein synthetisches lösliches Polymer mit niedrigem Molekulargewicht von unter 500 000 mit derselben chemischen Natur und demselben ionischen Charakter wie der herzustellende Polyelektrolyt begegeben wird.

2. Verfahren nach Anspruch 1, dadurch gekennzeichnet, daß das lösliche Polymer ein Vinylpolymer mit niedrigem Molekulargewicht ist, das in Form von wässriger Lösung eingeführt wird, die eine Gewichtskonzentration von mindestens 15%, vorzugsweise von nahe 30%, hat und in einer Menge von 2,5 bis 20 Gew.-% vom Gewicht der endgültigen Emulsion beigegeben wird.

3. Verfahren nach Anspruch 1, dadurch gekennzeichnet, daß das lösliche Polymer ein Vinyl-Koagulierungsmittel mit einem Molekulargewicht von nahe 100 000 ist.

4. Verfahren nach Anspruch 1, dadurch gekennzeichnet, daß das Polymer mit niedrigem Molekulargewicht ein Polydiallyldimethyl-ammoniumchlorid (PolyDADMAC) ist.

5. Verfahren nach einem der Ansprüche 1 bis 4, dadurch gekennzeichnet, daß der Polyelektrolyt mit hohem Molekulargewicht ein Polyacrylamid mit einem Molekulargewicht von mehr als fünf Millionen und vorteilhafterweise von mehr als zehn Millionen ist.

6. Verfahren nach Anspruch 5, dadurch gekennzeichnet, daß das Polyacrylamid kationisch ist und ein Copolymer von Acrylamid mit einem nichtgesättigten kationischen Ethylenmonomer ist, das aus der Gruppe ausgewählt ist, die besteht aus Dimethylaminoethylacrylat (ADAME) und Dimethylaminoethylmethacrylat (MADAME), die quaterniert oder in Salz umgewandelt sind, sowie aus Dimethyldiallylammoniumchlorid (DADMAC), Acrylamidopropyltrimethylammoniumchlorid (APTAC) und Methacrylamidopropyltrimethylammoniumchlorid (MAPTAC).

7. Verfahren nach Anspruch 5, dadurch gekennzeichnet, daß das Polyacrylamid ein anionisches Copolymer aus Acrylamid und Acryl- oder Methacrylsäure ist.

8. Verfahren nach Anspruch 5, dadurch gekennzeichnet, daß das Polyacrylamid nichtionisch ist und ein Acrylamid- oder Methacrylamidpolymer ist.

## Claims

1. Process for preparing a stable emulsion of a high molecular weight higher than one million, by reverse emulsion, wherein the formation of gel is reduced to the maximum, said process comprising ;
- dissolving monomers in an aqueous phase ;
- preparing an organic phase containing a surface active agent;
- mixing both phases to obtain a water in oil emulsion (W/O) ;
- degassing in particular with nitrogen ;
- polymerizing monomers ;
- adding to said emulsion (W/O) a reversing agent so as to make the polyelectrolytes obtained water soluble ;
said process being characterized in that it consists, before the mixing of both phases, in adding to said aqueous phase, with light stirring, a water soluble synthetic polymer having a low molecular weight lower than 500 000, said polymer having the same chemical nature and of the same ionic nature as the polyelectrolyte to be formed.

2. Process of claim1, wherein the water soluble polymer is a vinyle polymer of low molecular weight added in the form of an aqueous solution having a concentration of at least 15 %, advantageously about 30 % by weight and is added in a proportion of 2,5 to 20 % by weight of the final emulsion.

3. Process of claim 1, wherein the water soluble polymer is a vinyle coagulating agent of a molecular weight of about 100 000.

4. Process of claim 1, wherein said low molecular weight polymer is a polydiallyl-dimethyl ammonium chloride (poly DADMAC).

5. Process of one of claims 1 to 4, wherein said high molecular weight polyelectrolyte is a polyacrylamide of a molecular weight higher than 5 millions, advantageously 10 millions.

6. Process of claim 5, wherein said polyacrylamide is cationic and is a copolymer of acrylamide and an unsaturated cationic ethylenique monomer selected from the group consisting of dimethylaminoethyl acrylate (ADAME), dimethylaminoethyl methacrylate (MADAME), either quaternized or in salt form, dimethyldiallylammonium chloride (DADMAC), acrylamidopropyltrimethylammonium chloride (APTAC), and methacrylamidopropyltrimethylammonium chloride (MAPTAC).

7. Process of claim 5, wherein said polyacrylamide is an anionic copolymer of acrylamide and of acrylic or methacrylic acid.

8. Process of claim 5, wherein said polyacrylamide is non ionic and is a polymer of acrylamide or methacrylamide.
